# EUROPÄISCHE PATENTSCHRIFT

(11) **EP 1 327 070 B1**
(45) Veröffentlichungstag und Bekanntmachung des Hinweises auf die Patenterteilung: **14.01.2009**
(21) Anmeldenummer: 01982157.8
(22) Anmeldetag: 27.09.2001
(51) Int. Cl.: F02M 61/18

(54) **BRENNSTOFFEINSPRITZVENTIL**
FUEL-INJECTION VALVE
SOUPAPE D'INJECTION DE CARBURANT

(30) Priorität: 04.10.2000 DE 10049034
(43) Veröffentlichungstag der Anmeldung: 16.07.2003
(73) Patentinhaber: ROBERT BOSCH GMBH, 70442 Stuttgart (DE)
(72) Erfinder: LUFT, Heinz, 96114 Hirschaid (DE)
(74) Vertreter: Körfer, Thomas
(86) Internationale Anmeldenummer: PCT/DE2001/003713
(87) Internationale Veröffentlichungsnummer: WO 2002/029234

(56) Entgegenhaltungen:
- EP-A- 1 469 194
- DE-A- 19 736 682
- DE-A- 19 927 196
- DE-A- 19 935 263
- US-A- 4 179 069
- US-A- 5 016 819
- US-A- 5 076 499
- US-A- 5 931 391

## Beschreibung

### Stand der Technik

Die Erfindung geht aus von einem Brennstoffeinspritzventil nach der Gattung des Hauptanspruchs.

Aus der DE 197 36 682 A1 ist ein Brennstoffeinspritzventil zum direkten Einspritzen von Brennstoff in den Brennraum einer gemischverdichtenden, fremdgezündeten Brennkraftmaschine bekannt, welches am stromabwärtigen Ende des Brennstoffeinspritzventils einen Führungs- und Sitzbereich aufweist, der von drei scheibenförmigen Elementen gebildet wird. Dabei ist ein Drallelement zwischen einem Führungselement und einem Ventilsitzelement eingebettet. Das Führungselement dient der Führung einer es durchragenden, axial beweglichen Ventilnadel, während ein Ventilschließabschnitt der Ventilnadel mit einer Ventilsitzfläche des Ventilsitzelements zusammenwirkt. Das Drallelement weist einen inneren Öffnungsbereich mit mehreren Drallkanälen auf, die nicht mit dem äußeren Umfang des Drallelements in Verbindung stehen. Der gesamte Öffnungsbereich erstreckt sich vollständig über die axiale Dicke des Drallelements.

Nachteilig an dem aus der obengenannten Druckschrift bekannten Brennstoffeinspritzventil ist insbesondere, daß bei der Montage des Drallelements zwischen dem Drallelement und dem Führungselement sowie zwischen dem Drallelement und dem Ventilsitzelement Spalte entstehen. Dadurch wird der Zumessquerschnitt verändert, wodurch die Streuung des statischen Durchflusses durch das Brennstoffeinspritzventil steigt. Dies wirkt sich durch Unterschiede in der pro Einspritzzyklus zugemessenen Brennstoffmenge negativ auf den Betrieb des Brennstoffeinspritzventils aus.

Aus US-A-4 179 069 ist ein elektromagnetisches Kraftstoffeinspritzventil bekannt, bei welchem das Ventil ein topfartiges Gehäuse mit einem Boden aufweist, in welchem eine Abspritzöffnung mit einem Ventilsitz gebildet ist. Die Ventilnadel des Ventils ist in einer Bohrung einer Buchse geführt, welche passend in das Ventilgehäuse eingesteckt ist. An einer Stirnseite hat die Buchse einen Ringbund, auf welchen ein Ringkörper aufgepresst ist. Der Ringkörper dient als Drallelement des Ventils und liegt mit seiner gesamten dem Boden des Gehäuses gegenüberliegenden Fläche auf diesem plan auf.

Das Dokument EP-A-1 469 194 ist ein Dokument zum Stand der Technik nach Art. 54 (3) EPÜ. Dieses Dokument zeigt eine keilförmige Fläche außerhalb des Drallkörpers.

### Vorteile der Erfindung

Das erfindungsgemäße Brennstoffeinspritzventil mit den Merkmalen des Anspruchs 1 hat demgegenüber den Vorteil, dass der Ventilsitzkörper an seiner zulaufseitigen, dem Drallelement zugewandten Stirnfläche eine ringförmige Erhöhung aufweist, welche höher ist als die fertigungsbedingten Unebenheiten der Oberflächen des Ventilsitzkörpers und des Drallelements, wobei die ringförmige Erhöhung an einer radial auβeren seite von einer keilförmigen Fläche umgeben ist. Dadurch werden die durch die Montage und die nachfolgende Erwärmung beim Betrieb des Brennstoffeinspritzventils auftretenden Spalte zwischen dem Ventilsitzkörper und dem Drallelement auf einen durch die Höhe der ringförmigen Erhöhung festgelegten Wert reduziert, der durch die Einstellung des statischen Durchflusses durch andere Komponenten, wie z.B. eine Einstellvorrichtung im Bereich der Brennstoffzufuhr, ausgeglichen werden kann.

Durch die in den Unteransprüchen aufgeführten Maßnahmen sind vorteilhafte Weiterentwicklungen des im Hauptanspruch angegebenen Brennstoffeinspritzventils möglich.

Von Vorteil ist dabei insbesondere die Ausbildung einer Ringfläche auf der ringförmigen Erhöhung, die das Bauteil unempfindlicher gegen Fertigungstoleranzen macht.

Von Vorteil ist weiterhin, dass das Drallelement bei der Montage zwischen dem Führungselement und dem Ventilsitzkörper eingespannt wird und dadurch Temperaturänderungen während des Betriebes des Brennstoffeinspritzventils ohne Auswirkung auf die Spaltweite bzw. die zugemessene Brennstoffmenge bleiben.

Vorteilhafterweise sind die Brennstoffkanäle des Führungselements so angeordnet, daß der Brennstoff ungehindert und ohne störende Drosseleffekte in die Drallkanäle fließen und zum Dichtsitz strömen kann.

Von Vorteil ist auch die Ausbildung einer Drallkammer, deren Volumen je nach den Anforderungen so gewählt werden kann, daß Drosseleffekte ausgeschaltet werden können.

Die die ringförmige Erhöhung begrenzenden keilförmigen Flächen an der Stirnseite des Ventilsitzkörpers sind leicht herstellbar und können je nach Anforderungen mit beliebigen Winkeln relativ zu einer horizontalen Bezugsebene versehen sein.

Die ringförmige Erhöhung kann auch in Form eines Rings, der auf der Stirnfläche des Ventilsitzkörpers angebracht wird, ausgeführt sein. Der Vorteil dieser Ausführungsvariante liegt darin, den serienmäßigen Ventilsitzkörper unverändert übernehmen zu können.

### Zeichnung

Ausführungsbeispiele der Erfindung sind in der Zeichnung vereinfacht dargestellt und in der nachfolgenden Beschreibung näher erläutert. Es zeigen:
- Fig. 1: einen schematischen schnitt durch ein erfindungsgemäßes Ausführungsbeispiel eines Brennstoffeinspritzventils,
- Fig. 2A: einen schematischen Teilschnitt durch ein erstes Ausführungsbeispiel eines erfindungsgemäßen Brennstoffeinspritzventils im Bereich IIA in Fig. 1,
- Fig. 2B: eine vergrößerte Ansicht des Ventilsitzkörpers des in Fig. 2A dargestellten ersten Ausführungsbeispiels des erfindungsgemäßen Brennstoffeinspritzventils,
- Fig. 2C: eine Ansicht des Ventilsitzkörpers eines zweiten Ausführungsbeispiels eines erfindungsgemäßen Brennstoffeinspritzventils im gleichen Bereich wie Fig. 2B, und
- Fig. 2D: eine schematische Aufsicht auf das Drallelement eines erfindungsgemäßen Brennstoffeinspritzventils entgegen der Strömungsrichtung des Brennstoffs.

### Beschreibung der Ausführungsbeispiele

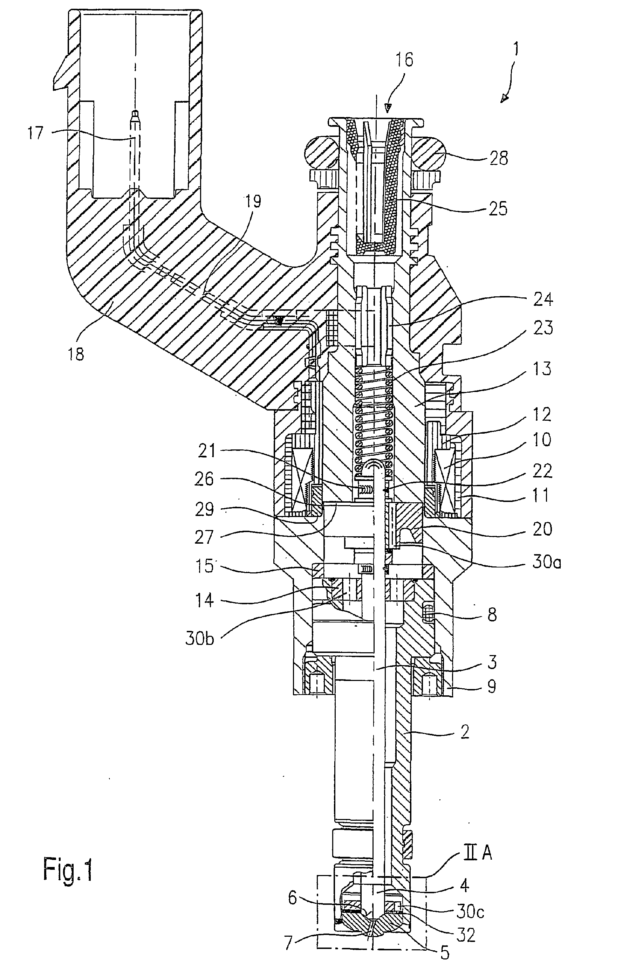

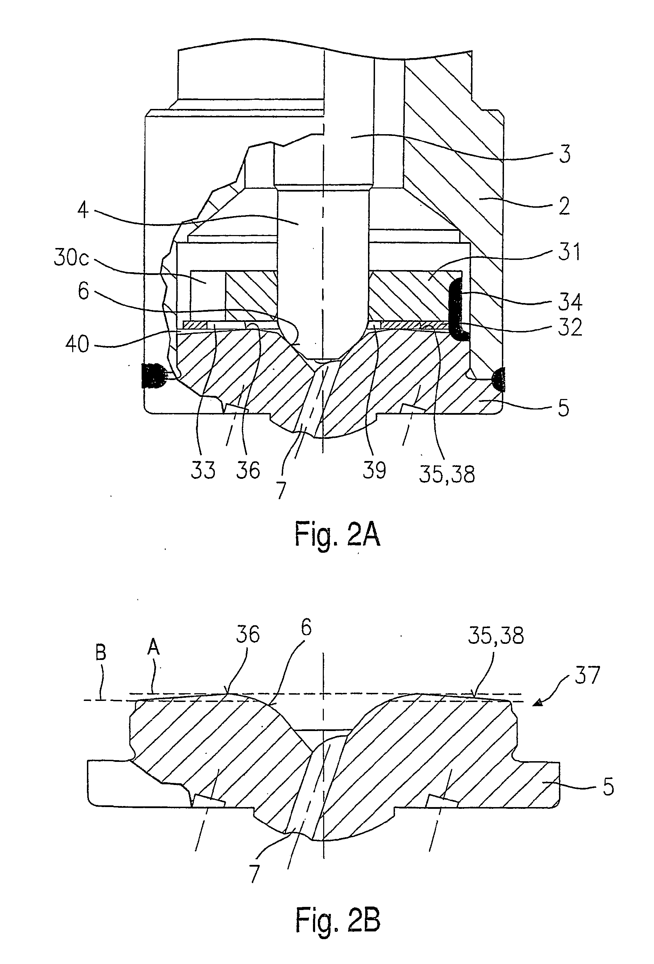

Bevor anhand der Figuren 2A bis 2D Ausführungsbeispiele eines erfindungsgemäßen Brennstoffeinspritzventils 1 näher beschrieben werden, soll zum besseren Verständnis der Erfindung zunächst anhand von Fig. 1 das erfindungsgemäße Brennstoffeinspritzventil 1 in einer Gesamtdarstellung bezüglich seiner wesentlichen Bauteile kurz erläutert werden.

Das Brennstoffeinspritzventil 1 ist in der Form eines Brennstoffeinspritzventils für Brennstoffeinspritzanlagen von gemischverdichtenden, fremdgezündeten Brennkraftmaschinen ausgeführt. Das Brennstoffeinspritzventil 1 eignet sich insbesondere zum direkten Einspritzen von Brennstoff in einen nicht dargestellten Brennraum einer Brennkraftmaschine.

Das Brennstoffeinspritzventil 1 besteht aus einem Düsenkörper 2, in welchem eine Ventilnadel 3 angeordnet ist. Die Ventilnadel 3 steht mit einem Ventilschließkörper 4 in Wirkverbindung, der mit einer auf einem Ventilsitzkörper 5 angeordneten Ventilsitzfläche 6 zu einem Dichtsitz zusammenwirkt. Bei dem Brennstoffeinspritzventil 1 handelt es sich im Ausführungsbeispiel um ein nach innen öffnendes Brennstoffeinspritzventil 1, welches über eine Abspritzöffnung 7 verfügt. Der Düsenkörper 2 ist durch eine Dichtung 8 gegen den Außenpol 9 einer Magnetspule 10 abgedichtet. Die Magnetspule 10 ist in einem Spulengehäuse 11 gekapselt und auf einen Spulenträger 12 gewickelt, welcher an einem Innenpol 13 der Magnetspule 10 anliegt. Der Innenpol 13 und der Außenpol 9 sind durch einen Spalt 26 voneinander getrennt und stützen sich auf einem Verbindungsbauteil 29 ab. Die Magnetspule 10 wird über eine Leitung 19 von einem über einen elektrischen Steckkontakt 17 zuführbaren elektrischen Strom erregt. Der Steckkontakt 17 ist von einer Kunststoffummantelung 18 umgeben, die am Innenpol 13 angespritzt sein kann.

Die Ventilnadel 3 ist in einer Ventilnadelführung 14 geführt, welche scheibenförmig ausgeführt ist. Zur Hubeinstellung dient eine zugepaarte Einstellscheibe 15. An der anderen Seite der Einstellscheibe 15 befindet sich ein Anker 20. Dieser steht über einen ersten Flansch 21 kraftschlüssig mit der Ventilnadel 3 in Verbindung, welche durch eine Schweißnaht 22 mit dem ersten Flansch 21 verbunden ist. Auf dem ersten Flansch 21 stützt sich eine Rückstellfeder 23 ab, welche in der vorliegenden Bauform des Brennstoffeinspritzventils 1 durch eine Hülse 24 auf Vorspannung gebracht wird.

Ein zweiter Flansch 31, welcher mit der Ventilnadel 3 über eine Schweißnaht 33 verbunden ist, dient als unterer Ankeranschlag. Ein elastischer Zwischenring 32, welcher auf dem zweiten Flansch 31 aufliegt, vermeidet Prellen beim Schließen des Brennstoffeinspritzventils 1.

In der Ventilnadelführung 14, im Anker 20 und am Ventilsitzkörper 5 verlaufen Brennstoffkanäle 30a bis 30c, die den Brennstoff, welcher über eine zentrale Brennstoffzufuhr 16 zugeführt und durch ein Filterelement 25 gefiltert wird, zur Abspritzöffnung 7 leiten. Das Brennstoffeinspritzventil 1 ist durch eine Dichtung 28 gegen eine nicht weiter dargestellte Brennstoffleitung abgedichtet.

Im Ruhezustand des Brennstoffeinspritzventils 1 wird der Anker 20 von der Rückstellfeder 23 entgegen seiner Hubrichtung so beaufschlagt, daß der Ventilschließkörper 4 am Ventilsitz 6 in dichtender Anlage gehalten wird. Bei Erregung der Magnetspule 10 baut diese ein Magnetfeld auf, welches den Anker 20 entgegen der Federkraft der Rückstellfeder 23 in Hubrichtung bewegt, wobei der Hub durch einen in der Ruhestellung zwischen dem Innenpol 12 und dem Anker 20 befindlichen Arbeitsspalt 27 vorgegeben ist. Der Anker 20 nimmt den Flansch 21, welcher mit der Ventilnadel 3 verschweißt ist, ebenfalls in Hubrichtung mit. Der mit der Ventilnadel 3 in Wirkverbindung stehende Ventilschließkörper 4 hebt von der Ventilsitzfläche 6 ab und der über die Brennstoffkanäle 30a bis 30c zur Abspritzöffnung 7 geführte Brennstoff wird abgespritzt.

Wird der Spulenstrom abgeschaltet, fällt der Anker 20 nach genügendem Abbau des Magnetfeldes durch den Druck der Rückstellfeder 23 vom Innenpol 13 ab, wodurch sich der mit der Ventilnadel 3 in Wirkverbindung stehende Flansch 21 entgegen der Hubrichtung bewegt. Die Ventilnadel 3 wird dadurch in die gleiche Richtung bewegt, wodurch der Ventilschließkörper 4 auf der Ventilsitzfläche 6 aufsetzt und das Brennstoffeinspritzventil 1 geschlossen wird.

Fig. 2A zeigt in einer auszugsweisen Schnittdarstellung das abspritzseitige Ende des in Fig. 1 dargestellten erfindungsgemäßen Brennstoffeinspritzventils 1. Der in Fig. 2A dargestellte Ausschnitt ist in Fig. 1 mit IIA bezeichnet. Mit Fig. 1 übereinstimmende Bauteile sind dabei mit übereinstimmenden Bezugszeichen versehen.

Das in Fig. 2A dargestellte abspritzseitige Ende eines erfindungsgemäßen Brennstoffeinspritzventils 1 umfaßt einen Ventilsitzkörper 5, der an einer zulaufseitigen Stirnfläche 35 eine ringförmige Erhöhung 36 aufweist. Im Ventilsitzkörper 5 ist eine Abströmöffnung 7 ausgebildet. Der Ventilsitzkörper 5 bildet mit der daran angebrachten Ventilsitzfläche 6 sowie dem Ventilschließkörper 4, der Teil der Ventilnadel 3 ist, einen Dichtsitz. Die Ventilnadel 3 durchgreift dabei ein Führungselement 31 sowie ein Drallelement 32. Das Drallelement 32 ist dabei zwischen dem Führungselement 31 und dem Ventilsitzkörper 5 angeordnet. Der Ventilsitzkörper 5 ist über eine Schweißnaht 34 mit dem Drallelement 32 und dem Führungselement 31 verbunden. Die Verbindung erfolgt vorzugsweise unter Vorspannung, damit das Drallelement 32 relativ zum Ventilsitzkörper 5 eine Lage einnimmt, welche durch spätere Erwärmung beim Betrieb des Brennstoffeinspritzventils 1 sowie die Hubbewegung der Ventilnadel 3 nicht mehr veränderbar ist.

Das Führungselement 31 weist Brennstoffkanäle 30c auf, welche mit Drallkanälen 33, welche in dem Drallelement 32 ausgebildet sind, korrespondieren.

Das Drallelement 32 ist vorzugsweise scheibenförmig in einer konstanten Dicke ausgebildet und liegt auf der zuströmseitigen Stirnfläche 35 des Ventilsitzkörpers 5 auf. Durch die ringförmige Erhöhung 36 werden fertigungstechnische Unebenheiten des Drallelements 32 sowie der zulaufseitigen Stirnfläche 35 des Ventilsitzkörpers 5 auf einen Spalt 40 mit einer definierten Weite reduziert. Die Weite des Spalts 40 zwischen dem Ventilsitzkörper 5 und dem Drallelement 32 kann dabei beispielsweise 7 µm betragen. Der Durchmesser der ringförmigen Erhöhung 36 wird dabei so gewählt, daß die Drallkanäle 33 des Drallelements 32 geschnitten werden. Die Erhöhung 36 kann auch teilringförmig ausgebildet und im Bereich der Drallkanäle 33 unterbrochen sein. Der Durchmesser kann dabei beispielsweise 3,0 mm betragen. Die ringförmige Erhöhung 36 kann entweder durch Abschrägen der zulaufseitigen Stirnfläche 35 des Ventilsitzkörpers 5 mit diesem einstückig hergestellt werden, wobei eine keilförmige Fläche 38 entsteht, welche nach einer Außenseite 37 des Ventilsitzkörpers 5 abfällt. Es ist jedoch auch möglich, die ringförmige Erhöhung 36 durch Aufbringen einer ringförmigen Struktur auf den Ventilsitzkörper 5 herzustellen. Die ringförmige Erhöhung 36 wird dabei durch Löten oder Schweißen mit dem Ventilsitzkörper 5 verbunden.

Wird das Brennstoffeinspritzventil 1 betätigt, wird die Ventilnadel 3 entgegen einer Strömungsrichtung des Brennstoffes bewegt, wodurch der Ventilschließkörper 4 von der Ventilsitzfläche 6 abhebt und Brennstoff durch die Brennstoffkanäle 30c, die Drallkanäle 33 und die Abspritzöffnung 7 abgespritzt wird.

Fig. 2B zeigt zur Verdeutlichung der erfindungsgemäßen Maßnahme in einer Vergrößerung den Ventilsitzkörper 5 des in Fig. 2A dargestellten ersten Ausführungsbeispiels.

Zur Verdeutlichung der ringförmigen Erhöhung 36 sind in Fig. 2B zwei gestrichelte Linien A und B eingeführt. Die ringförmige Erhöhung 36 ist dabei überhöht dargestellt. Die keilförmige Fläche 38 senkt sich zum radial äußeren Bereich 37 des Ventilsitzkörpers 5 über den Durchmesser des Ventilsitzkörpers 5 um beispielsweise 7 µm ab, was der Abstand der Linien A und B in Fig. 2B verdeutlicht. Die Form der Ventilsitzfläche 6 sowie die abströmseitigen Strukturen wie die Abspritzöffnung 7 werden durch die erfindungsgemäße Maßnahme nicht verändert.

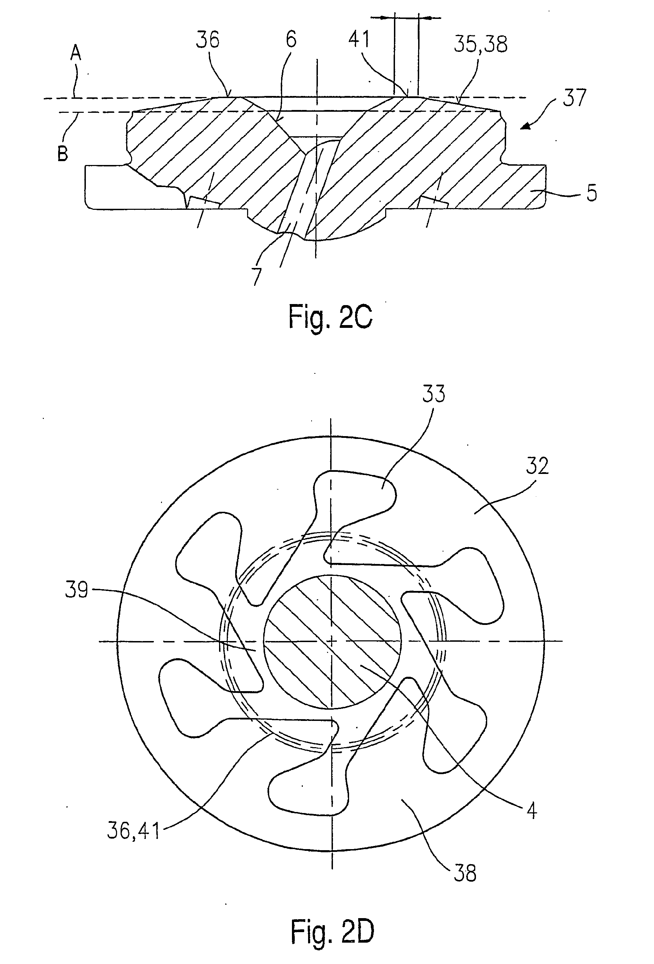

Fig. 2C zeigt in der gleichen Ansicht wie Fig. 2B ein zweites Ausführungsbeispiel des Ventilsitzkörpers 5 eines erfindungsgemäß ausgestalteten Brennstoffeinspritzventils 1.

Im Gegensatz zu Fig. 2B ist die ringförmige Erhöhung 36, die in Fig. 2B ohne signifikante radiale Ausdehnung, also kantenförmig durch die an die geneigte Ventilsitzfläche 6 angrenzende keilförmige Fläche 38, ausgebildet ist, im vorliegenden zweiten Ausführungsbeispiel als ringförmige Erhöhung 36 mit einer Ringfläche 41 ausgeführt, die plan an dem Drallelement 32 anliegt. Die radiale Ausdehnung der Ringfläche 41 kann dabei beispielsweise 0,2 bis 0,4 mm betragen. Der Vorteil einer flächigen Ausprägung der ringförmigen Erhöhung 36 liegt in einer verbesserten Anlage an dem Drallelement, so daß Fertigungstoleranzen nicht zu einer Erhöhung der Streuung des statischen Durchflusses führen, wie es unter Umständen bei einer linienartigen Kontaktfläche wie im ersten Ausführungsbeispiel möglich wäre, da bereits durch kleine Unebenheiten neue Spalte zwischen der ringförmigen Erhöhung 36 des Ventilsitzkörpers 6 und dem Drallelement 32 entstehen.

Figur 2D zeigt eine Aufsicht auf das Drallelement 32 mit den Drallkanälen 33, welches von dem Ventilschließkörper 4 durchgriffen wird. Die ringförmige Erhöhung 36 des Ventilsitzkörpers 5 ist dabei auf das Drallelement 32 projiziert. Dabei deuten die äußerste und die innerste Kreislinie die radiale Ausdehnung der im zweiten Ausführungsbeispiel in Fig. 2C dargestellten ringförmigen Erhöhung 36 mit der Ringfläche 41 an.

Zwischen den Drallkanälen 33 und dem Ventilschließkörper 4 ist eine Drallkammer 39 ausgebildet. Das Volumen der Drallkammer 39 kann dabei gemäß den Anforderungen an das Brennstoffeinspritzventil 1 so gewählt werden, daß entweder beabsichtigte Drosseleffekte durch einen kleinen Durchmesser auftreten oder aber die Drosseleffekte vollständig durch ein größeres Volumen der Drallkammer 39 eliminiert werden. Das Volumen der Drallkammer 39 muß dabei in jedem Fall so dimensioniert werden, daß die durch die Drallkanäle 33 in dem Drallelement 32 erzeugte Drallströmung in der Drallkammer 39 homogen bleibt und auch während der Totzeit zwischen zwei Einspritzzyklen des Brennstoffeinspritzventils 1 nach Möglichkeit nicht zum Erliegen kommt, da das Einspritzverhalten sonst negativ beeinflußt wird.

Durch die oben beschriebene erfindungsgemäße Ausgestaltung des Ventilsitzkörpers 5 des Brennstoffeinspritzventils 1 kann erreicht werden, daß der zwischen dem Drallelement 32 und dem Ventilsitzkörper 5 vorhandene Spalt 40 aufgrund von Unebenheiten durch den Fertigungsprozeß soweit eliminiert werden kann, daß eine konstante Weite des Spalts 40 erreicht wird und die dadurch bedingte Durchflußerhöhung durch geeignete Einstellung des statischen Durchflusses im Bereich der Brennstoffzufuhr ausgeglichen wird. In der Folge tritt insgesamt nur noch eine sehr geringfügige Streuung des statischen Durchflusses auf.

Die Erfindung ist nicht auf das dargestellte Ausführungsbeispiel beschränkt und z. B. auch für Anordnungen mit anderen Drallelementen 32 mit mehr oder weniger Drallkanälen 33 sowie für beliebige Ausführungen von Brennstoffeinspritzventilen 1 mit beliebigen Aktoren 10 anwendbar, wie in dem beigefügten Ansprüchen beansprucht.

## Patentansprüche

1. Brennstoffeinspritzventil (1), insbesondere zum direkten Einspritzen von Brennstoff in einen Brennraum einer Brennkraftmaschine, mit einem Aktor (10), der mit einer Ventilnadel (3) in Wirkverbindung steht, wobei die Ventilnadel (3) an ihrem abspritzseitigen Ende einen Ventilschließkörper (4) aufweist, der mit einer Ventilsitzfläche (6), die an einem Ventilsitzkörper (5) ausgebildet ist, zu einem Dichtsitz zusammenwirkt, und der Ventilschließkörper (4) ein Drallelement (32), welches an einer zulaufseitigen Stirnfläche (35) des Ventilsitzkörpers (5) angeordnet ist, durchgreift, wobei in dem Drallelement (32) Drallkanäle (33) ausgebildet sind und wobei der Ventilsitzkörper (5) an der dem Drallelement (32) zugewandten, zulaufseitigen Stirnfläche (35), eine ringförmige oder teilringförmige Erhöhung (36) aufweist, wobei die ringförmige Erhöhung (36) an einer radial äußeren Seite (37) von einer keilförmigen Fläche (38) umgeben ist, dergestalt, dass zwischen dem Drallelement (32) und dem Ventilsitzkörper (5) ein Spalt (40) vorhanden ist.

2. Brennstoffeinspritzventil nach Anspruch 1,
**dadurch gekennzeichnet,**
**dass** die ringförmige Erhöhung (36) mit dem Ventilsitzkörper (5) einstückig ausgebildet oder mit diesem verbunden ist.

3. Brennstoffeinspritzventil nach Anspruch 1 oder 2,
**dadurch gekennzeichnet,**
**dass** die ringförmige Erhöhung (36) eine Ringfläche (41) aufweist, die an dem Drallelement (32) plan anliegt.

4. Brennstoffeinspritzventil nach Anspruch 1,
**dadurch gekennzeichnet,**
**dass** die keilförmige Fläche (38) nach radial außen abfällt.

5. Brennstoffeinspritzventil nach Anspruch 2,
**dadurch gekennzeichnet,**
**dass** die ringförmige Erhöhung (36) durch Schweißen, Löten oder ähnliche Verfahren mit der zulaufseitige Stirnfläche(35) des Ventilsitzkörpers (5) verbunden ist.

6. Brennstoffeinspritzventil nach einem der Ansprüche 1 bis 5,
**dadurch gekennzeichnet,**
**dass** das Drallelement (32) zwischen einem Führungselement (31) und dem Ventilsitzkörper (5) angeordnet ist.

7. Brennstoffeinspritzventil nach einem der Ansprüche 1 bis 6,
**dadurch gekennzeichnet,**
**dass** das Führungselement (31) Brennstoffkanäle (30c) aufweist, die mit den Drallkanälen (33) des Drallelements (32) korrespondieren.

8. Brennstoffeinspritzventil nach einem der Ansprüche 1 bis 7,
**dadurch gekennzeichnet,**
**dass** das Führungselement (31) und das Drallelement(32) durch eine Schweißnaht (34) mit dem Ventilsitzkörper (5) verbunden sind.

9. Brennstoffeinspritzventil nach einem der Ansprüche 1 bis 8,
**dadurch gekennzeichnet,**
**dass** zwischen dem Drallelement (32) und dem Ventilschließkörper (4) eine Drallkammer (39) ausgebildet ist.

## Claims

1. Fuel injection valve (1), in particular for directly injecting fuel into a combustion chamber of an internal combustion engine, having an actuator (10) which is operatively connected to a valve needle (3), with the valve needle (3) having, at its ejection-side end, a valve closing body (4) which interacts with a valve seat surface (6), which is formed on a valve seat body (5), so as to form a sealing seat, and with the valve closing body (4) extending through a swirl element (32) which is arranged on an inflow-side end surface (35) of the valve seat body (5), with swirl ducts (33) being formed in the swirl element (32), and with the valve seat body (5) having, on the inflow-side end surface (35) which faces towards the swirl element (32), an annular or partially annular elevation (36), with the annular elevation (36) being surrounded, at a radially outer side (37), by a wedge-shaped surface (38) in such a way that a gap (40) is provided between the swirl element (32) and the valve seat body (5).

2. Fuel injection valve according to Claim 1,
**characterized**
**in that** the annular elevation (36) is integrally formed with or is connected to the valve seat body (5).

3. Fuel injection valve according to Claim 1 or 2,
**characterized**
**in that** the annular elevation (36) has an annular surface (41) which bears flat against the swirl element (32).

4. Fuel injection valve according to Claim 1,
**characterized**
**in that** the wedge-shaped surface (38) slopes downward in the radially outward direction.

5. Fuel injection valve according to Claim 2,
**characterized**
**in that** the annular elevation (36) is connected by means of welding, soldering or similar processes to the inflow-side end surface (35) of the valve seat body (5).

6. Fuel injection valve according to one of Claims 1 to 5,
**characterized**
**in that** the swirl element (32) is arranged between a guide element (31) and the valve seat body (5).

7. Fuel injection valve according to one of Claims 1 to 6,
**characterized**
**in that** the guide element (31) has fuel ducts (30c) which correspond to the swirl ducts (33) of the swirl element (32).

8. Fuel injection valve according to one of Claims 1 to 7,
**characterized**
**in that** the guide element (31) and the swirl element (32) are connected to the valve seat body (5) by means of a weld seam (34).

9. Fuel injection valve according to one of Claims 1 to 8,
**characterized**
**in that** a swirl chamber (39) is formed between the swirl element (32) and the valve closing body (4).

## Revendications

1. Soupape d'injection de carburant (1), en particulier pour l'injection directe de carburant dans une chambre de combustion d'un moteur à combustion interne, comprenant un actionneur (10) qui est en liaison fonctionnelle avec une aiguille de soupape (3), l'aiguille de soupape (3) présentant, à son extrémité du côté d'injection, un corps de fermeture de soupape (4) qui coopère avec une surface de siège de soupape (6) qui est réalisée sur un corps de siège de soupape (5) pour former un siège hermétique, et le corps de fermeture de soupape (4) traversant un élément de turbulence (32), qui est disposé sur une surface frontale (35) du côté de l'afflux du corps de siège de soupape (5), des canaux de turbulence (33) étant réalisés dans l'élément de turbulence (32) et le corps de siège de soupape (5) présentant, sur la surface frontale (35) du côté de l'afflux, tournée vers l'élément de turbulence (32), un rehaussement (36) de forme annulaire ou partiellement annulaire, le rehaussement de forme annulaire (36) étant entouré au niveau d'un côté radialement extérieur (37) par une surface (38) en forme de coin, de telle sorte qu'entre l'élément de turbulence (32) et le corps de siège de soupape (5) est prévue une fente (40).

2. Soupape d'injection de carburant selon la revendication 1,
**caractérisée en ce que**
le rehaussement de forme annulaire (36) est réalisé d'une seule pièce avec le corps de siège de soupape (5) ou est connecté à celui-ci.

3. Soupape d'injection de carburant selon la revendication 1 ou 2,
**caractérisée en ce que**
le rehaussement de forme annulaire (36) présente une surface annulaire (41) qui s'applique à plat contre l'élément de turbulence (32).

4. Soupape d'injection de carburant selon la revendication 1,
**caractérisée en ce que**
la surface en forme de coin (38) descend radialement vers l'extérieur.

5. Soupape d'injection de carburant selon la revendication 2,
**caractérisée en ce que**
le rehaussement de forme annulaire (36) est connecté à la surface frontale (35) du corps de siège de soupape (5) par soudage, brasage ou par un procédé similaire.

6. Soupape d'injection de carburant selon l'une quelconque des revendications 1 à 5,
**caractérisée en ce que**
l'élément de turbulence (32) est disposé entre un élément de guidage (31) et le corps de siège de soupape (5).

7. Soupape d'injection de carburant selon l'une quelconque des revendications 1 à 6,
**caractérisée en ce que**
l'élément de guidage (31) présente des canaux de carburant (30c) qui correspondent aux canaux de turbulence (33) de l'élément de turbulence (32).

8. Soupape d'injection de carburant selon l'une quelconque des revendications 1 à 7,
**caractérisée en ce que**
l'élément de guidage (31) et l'élément de turbulence (32) sont connectés au corps de siège de soupape (5) par un cordon de soudure (34).

9. Soupape d'injection de carburant selon l'une quelconque des revendications 1 à 8,
**caractérisée en ce**
**qu'**une chambre de turbulence (39) est réalisée entre l'élément de turbulence (32) et le corps de fermeture de soupape (4).
